# EUROPEAN PATENT SPECIFICATION

(11) **EP 3 645 811 B1**
(45) Date of publication and mention of the grant of the patent: **11.11.2020**
(21) Application number: 18749080.0
(22) Date of filing: 20.07.2018
(51) Int. Cl.: E05B 37/00

(54) **MECHANICAL CLUTCH**
MECHANISCHE KUPPLUNG
EMBRAYAGE MÉCANIQUE

(30) Priority: 20.07.2017 GB 201711669
(43) Date of publication of application: 06.05.2020
(73) Proprietor: Borg Locks (HK) Limited, Central, Hong Kong (CN)
(72) Inventor: WONG, NGai Kwong, Taikoo Shing Quarry Bay (HK)
(74) Representative: Cameron Intellectual Property Ltd
(86) International application number: PCT/GB2018/052055
(87) International publication number: WO 2019/016563

(56) References cited:
- EP-A2- 2 436 944
- CN-Y- 2 536 716
- GB-A- 2 485 852
- GB-A- 2 528 327
- TW-A- 201 333 316
- US-A1- 2016 281 390

## Description

The present invention relates to a mechanical clutch, particularly, but not exclusively, a mechanical clutch for a mechanical combination door lock.

It is desirable in many applications to allow building entry doors, windows, cupboards etc. to be opened only by those who have been authorised to do so. One way of achieving this is to use a locking mechanism which requires a predetermined code to be entered before it can be unlocked.

Mechanical combination door locks are widely used for this purpose. Such locks typically have a series of alphanumeric buttons (often 4, 6 or 8) and a knob or handle which can be grasped by the user.

Efforts have been made to improve the tamper-proof capabilities of such locks. For example, GB2485852A (Kin Kei Hardware Industries Ltd) discloses a mechanical combination lock which employs a clutch mechanism which protects the lock against the application of excessive force. TW201333316A1 (Taiwan Fu Hsing Industrial Co. Ltd) operates in a similar manner.

In operation, the code is dialled into the mechanism by the authorised user, the knob or handle is turned and the mechanism unlocks. However, it is sometimes possible for otherwise unauthorised users to decipher the code from the mechanism itself as follows:-
1) Before attempting to press any of the alphanumeric buttons, the unauthorised user forcefully rotates the knob or handle a few degrees until further rotation is resisted. The knob or handle is linked to the coding mechanism which results in pressure being applied to the components of the coding mechanism which are linked to the buttons;
2) The user then gently presses each of the buttons on the locking mechanism. The unauthorised user is able to determine the code relatively easily by identifying which buttons have a different level of resistance to being pushed;
3) Once the full code has been identified by the unauthorised user, he then removes the rotational pressure on the knob or handle;
4) The unauthorised user can then enter the correct code into the mechanism, turn the knob or handle and gain unauthorised access.

This situation is clearly undesirable since it negates the purpose of installing a coded entry system.

According to a first aspect of the present invention there is provided a mechanical clutch for selectively mechanically connecting and disconnecting a rotational drive member and a rotational driven member within a locking mechanism; the mechanical clutch comprising:-
a drive member comprising a disc for rotation around an axis of rotation;
a driven member for rotation around said axis of rotation;
at least a clutch pin which selectively engages with the drive member to selectively mechanically and rotationally link the drive and driven member to one another;
a clutch pin engagement surface provided on the or each clutch pin; and
a corresponding clutch pin engagement surface provided on the drive member in the form of recesses on a face thereof such that, when the engaged drive and driven members are rotated against a magnitude of rotational resistance which is below a threshold magnitude of rotational resistance, the respective clutch pin engagement surfaces of the or each clutch pin and drive member will co-act with one another to retain said rotational connection between the drive and driven member and, when the drive and driven members are rotated against a magnitude of rotational resistance which is above the threshold magnitude of rotational resistance the respective clutch pin engagement surfaces of the or each clutch pin and drive member will co-act with one another to urge the or each clutch pin out of rotational driving engagement between the drive and driven member.

Optionally, the drive and driven members may comprise portions of a locking mechanism and the threshold magnitude of rotational resistance may be determined by the ability or inability of a component, such as a pressure plate, within the locking mechanism to move relative to the mechanical clutch.

The invention therefore usefully allows the handle of a combination door lock to be rotationally dislocated from the other components of the combination door lock such that an unauthorised user will no longer be able to determine the access code by the aforementioned method.

Furthermore, the resultant freely rotating handle (when no code has been entered or when only the incorrect code has been entered) protects the internal components of the mechanical combination door lock from being damaged. Even if an unauthorised user were to force the handle, those forces will not be transmitted to the pressure plate of the mechanical combination door lock due to the provided clutch action and hence will not damage any components of the mechanical combination door lock.

Optionally, a plurality of clutch pins may be provided.

The clutch pin engagement surface of the clutch pin may comprise a protruding tapered and rounded head portion. Optionally, the rounded head portion comprises a semi-spherical portion. Optionally, the drive member may comprise a plurality of corresponding clutch pin engagement surfaces adapted to receive said plurality of said head portions of said clutch pins therein.

Optionally, the clutch pin engagement surface of the or each clutch pin and the corresponding clutch pin engagement surface of the or each drive member are dimensioned and positioned relative to one another such that the portion of clutch pin engagement surface of the or each drive member engages with only a substantially eccentric portion of the semi-spherical head portion.

The clutch pin may comprise a tail portion mounted within a tail aperture of the driven member. Resilient means may be provided in order to resiliently urge the clutch pin into engagement with the driven member.

Optionally, two clutch pins may be provided in addition to a third locating pin adapted to provide mechanical support to the apparatus during rotational movement.

Further features and advantages of the aspects of the present invention will become apparent from the following description and from the appended claims.

Embodiments of the present invention will now be described by way of example only, with reference to the following diagrams, in which:-
Fig. 1 is a rear view of the mechanical clutch of the present invention where the mechanical clutch is mounted to a pressure plate and associated components of a standard mechanical combination lock;
Fig. 2 is a transverse illustration of an upper portion of the mechanical clutch of the invention viewed in the direction B indicated in Fig. 1;
Fig. 3 is a rear view of a clutch pin washer plate of the invention shown in isolation from other components of the invention;
Fig. 4 is a front view of a driven member of the invention shown in isolation from other components of the invention;
Fig. 5A is a rear view illustration of the upper portion of the mechanical clutch assembly in an at-rest configuration where movement of a pressure plate is prevented;
Fig. 5B is a transverse illustration of the upper portion of the mechanical clutch assembly of Fig. 5A viewed in the direction B indicated in Fig. 5A;
Fig. 5C is a more detailed illustration of the arrangement of Fig. 5B, where the mechanical engagement between a clutch pin, drive member and driven member is more clearly illustrated;
Fig. 6A is a rear illustration of the mechanical clutch assembly where movement of the lock pressure plate is prevented and where a handle / associated drive member and hence the driven member has been rotated by a relatively small angular rotation;
Fig. 6B is a transverse illustration of the assembly of Fig. 6A viewed in the direction B indicated in Fig. 6B;
Fig. 7A is a rear illustration of the mechanical clutch assembly where movement of the lock pressure plate is prevented and where a handle / associated drive member and hence the driven member has been rotated by a greater angular rotation such that the clutch pins have been pushed out of driving engagement with the drive member;
Fig. 7B is a transverse illustration of the assembly of Fig. 7A viewed in the direction B indicated in Fig. 7A;
Fig. 8A is a rear illustration of the mechanical clutch in an at-rest configuration where movement of a pressure plate is allowed;
Fig. 8B is a transverse illustration of the assembly of Fig. 8A viewed in the direction B indicated in Fig. 8A;
Fig. 9A is a rear illustration of the mechanical clutch where movement of a pressure plate is allowed and where a handle and hence the drive member has been rotated by a relatively small angular rotation;
Fig. 9B is a transverse illustration of the assembly of Fig. 9A viewed in the direction B indicated in Fig. 9A;
Fig. 10A is a rear illustration of the mechanical clutch where movement of a pressure plate is prevented and where a handle and hence the driven member has been rotated by a greater angular rotation; and
Fig. 10B is a transverse illustration of the assembly of Fig. 10A viewed in the direction B indicated in Fig. 10A;
Fig. 11 is a transverse partial cross section illustration of a further embodiment of the invention where three clutch pins are provided and where the clutch pins, drive member and driven member are illustrated in an at-rest configuration;
Fig. 12 is a front view illustration of the assembly of Fig. 11 viewed in the direction B indicated in Fig. 11;
Fig. 13 is a perspective illustration of the assembly of Fig. 11 provided with a handle holder and in the at-rest configuration;
Fig. 14 is a perspective illustration of the assembly of Fig. 11 in a slipping configuration; and
Fig. 15 is a perspective illustration of the assembly of Fig. 11 in an unlocked configuration

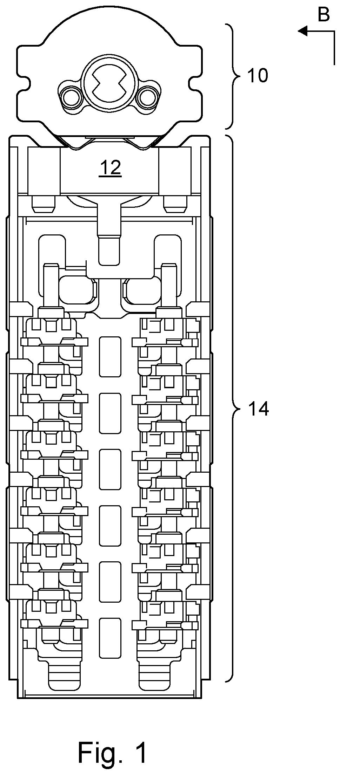

With reference to Fig. 1, in a first embodiment of the invention a mechanical clutch assembly generally designated 10 is mounted adjacent to, and in mechanical engagement with, a pressure plate 12 of a mechanical combination lock 14.

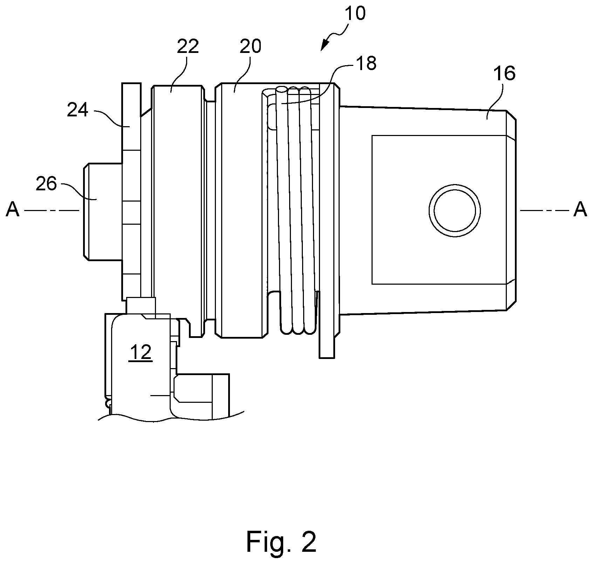

With reference to Fig. 2, taking features in turn progressively from the right hand side, the mechanical clutch assembly 10 comprises a handle holder 16, a handle holder return spring 18, drive member 20, driven memberdriven member 22, clutch pin washer plate 24 and spindle holder 26. Each of these components are coaxially mounted in engagement with one another such that they may rotate on an axis of rotation A-A.

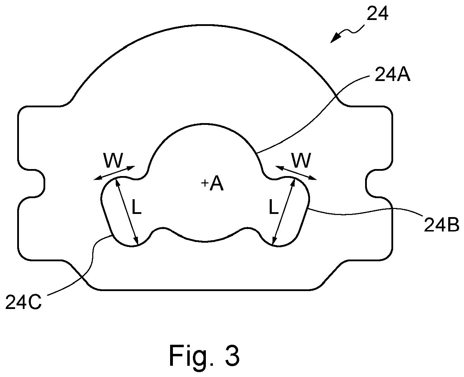

With reference to Fig. 3, the clutch pin washer plate 24 comprises an aperture having a first profiled section 24A (for receiving an end of a spindle therein), a right hand profiled section 24B and a left hand profiled section 24C. The width W of the right and left hand profiled sections 24B, 24C of the aperture is such that the sections 24B, 24C selectively allow the tails of a pair of clutch pins (not shown in Fig. 3) to be accommodated therein. The profiled sections 24B, 24C have a length L which is greater than their width W in order to allow the pair of clutch pins to be accommodated therein when in first and second angular positions, as will be described subsequently.

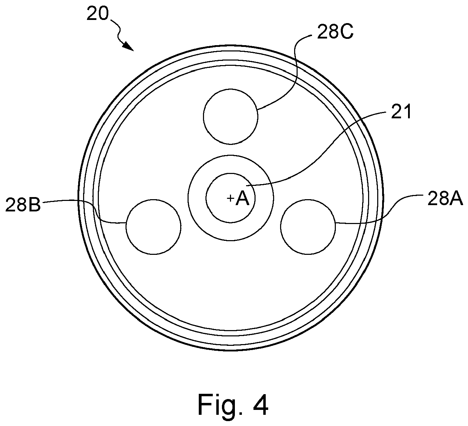

With reference to Fig.4, the drive member 20 comprises an aperture 21 for receiving an end of a spindle therein. The rear face of the drive member 20 comprises three clutch pin recesses 28A, 28B, 28C spaced around the aforementioned spindle aperture.

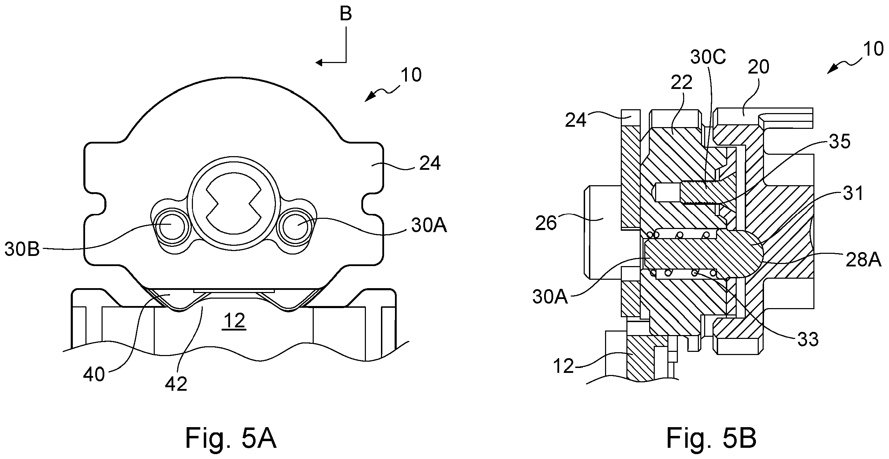

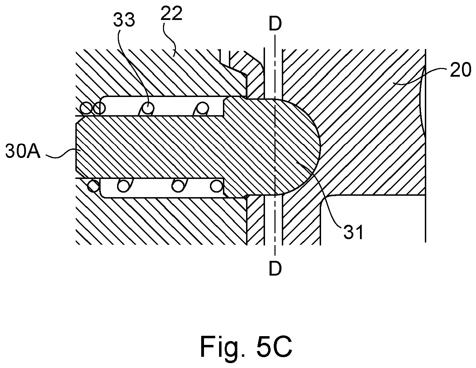

With reference to Figs. 5A, 5B and 5C, left and right-hand clutch pins 30A, 30B extend between the driven member 22 and the drive member 20. The left and right-hand clutch pins 30A, 30B comprise a generally cylindrical tail portion and an enlarged and tapered semi-hemispherical head portion 31. The head profile of the head sections 31 are shaped similarly to the profiles of the recesses 28A, 28B of the drive member 20 such that in the at-rest configuration (i.e. prior to the user angularly rotating the handle holder 16 by way of an attached handle (not shown)) shown in Figs. 5A, 5B and 5C, an eccentric (i.e. off-centre) portion of the head sections 31 rest within the recesses 28A, 28B. Resilient biasing means in the form of helical springs 33 are engaged with the clutch pins 30A, 30B in order to bias the heads 31A, 31B of the pins into the recesses 28A, 28B. As referenced in the later described embodiment, although the profiles of the recesses 28A, 28B may be generally similar to the head profiles of the head sections 31, these may instead have a slightly different degree of taper / angle in order to facilitate the correct clutch engagement between the contact surfaces of the clutch pin heads 31 and the inner surface of the recesses 28A, 28B.

A locating pin 30C is also provided in order to mechanically support the aforementioned engagement between the driven member 22 and drive member 20 before, during and after rotational movement of these components.

Operation of the clutch assembly 10 of the first embodiment will now be described with reference to two example scenarios. In the first scenario reciprocal movement of the pressure plate 12 away from the clutch assembly 10 is prevented (e.g. where the mechanical combination lock is in a locked condition). Whereas in the second scenario, reciprocal movement of the pressure plate 12 away from the clutch assembly 10 is allowed (e.g. where the mechanical combination lock is in an unlocked condition).

In use, and with reference to Figs. 5A to 7B, in a first scenario where movement of the pressure plate 12 away from the clutch assembly 10 is prevented (e.g. where the mechanical combination lock is in a locked condition) the clutch assembly 10 begins in the at-rest position illustrated in Figs. 5A and 5B.

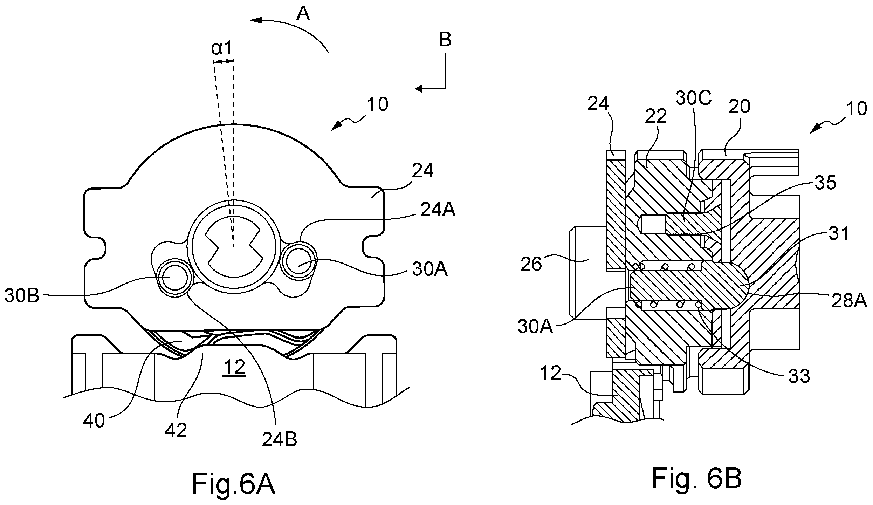

With reference to Figs. 6A and 6B, a user begins to turn the handle (not shown) in the direction A by a small angular rotation such that the drive member 20 and driven member 22 both begin to rotate together with one another by a small angular rotation α1. This causes a shoulder 40 of the driven member 22 to abut against a shoulder 42 of the pressure plate 12 which thereby prevents further angular rotation of the driven member 22 (since the locked pressure plate 12 is prevented from reciprocating away from the clutch arrangement 10). This small degree of angular rotation of the drive member 20 and driven member 22 also causes the clutch pins 30A and 30B to move in line with the extreme ends of their respective profiles 24A, 24B of the clutch washer plate 24. At this point, the drive member 20 and driven member 22 remain in rotational engagement with one another.

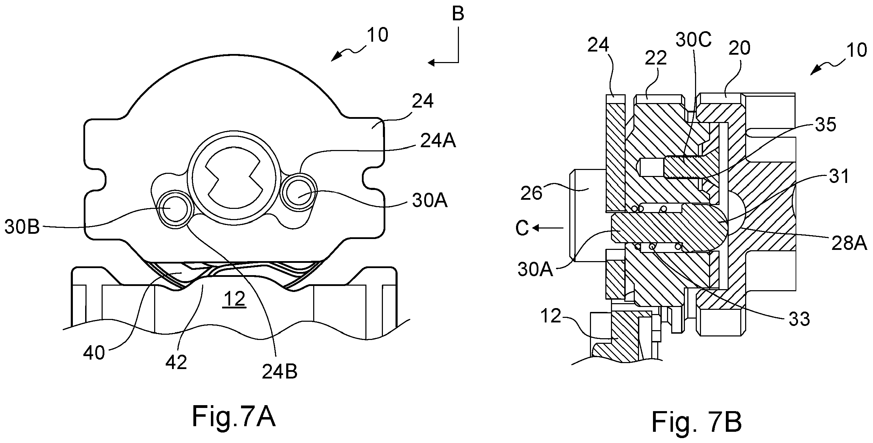

With reference to Figs. 7A and 7B, any further angular rotation of the handle (not shown) by the user cannot rotate the driven member 22 due to the abutment between its shoulder 40 and the shoulder 42 of the locked pressure plate 12. However, in view of the fact that the drive member 20 engages with an eccentric portion of the pin head 31 sphere which is offset from the diameter D-D (Fig. 5C) of that sphere, such continued angular rotation will impart a component of perpendicular force (i.e. a component of force in the same plane as the apparatus axis of rotation A-A) at the intersection between the heads 31A, 31B of the clutch pins and the respective recesses 28A, 28B within which they otherwise reside. This component of perpendicular force pushes the clutch pins 30A, 30B forwards in the direction Cagainst the bias of the helical springs 33 as illustrated in Fig. 7B. In so doing, the tail end of the clutch pins 30A, 30B are pushed into receipt within the respective profiles 24A, 24B of the clutch pin washer plate 24.

At this point, the resultant dissociation of the clutch pins 30A, 30B and their respective recesses 28A, 28B of the drive member20 disconnects the drive member 20 and the driven member 22 from being in rotational engagement with one another, such that the clutch assembly enters a slipping mode as is desired. Furthermore, the driven member 22 and drive member 20 will remain out of rotational engagement with one another while a (typically unauthorised) user turns the handle through greater angular rotations. When out of such rotational engagement turning of the handle does not result in turning of the spindle of any attached door unlocking mechanism and hence does not open the door.

When a (typically unauthorised) user returns the handle to the position illustrated in Figs. 5A and 5B the bias of the helical springs 33 will push the clutch pins 30A, 30B back into their respective recesses 28A, 28B on the drive member 20 in order to automatically re-establish rotational engagement between the drive member 20 and the driven member 22.

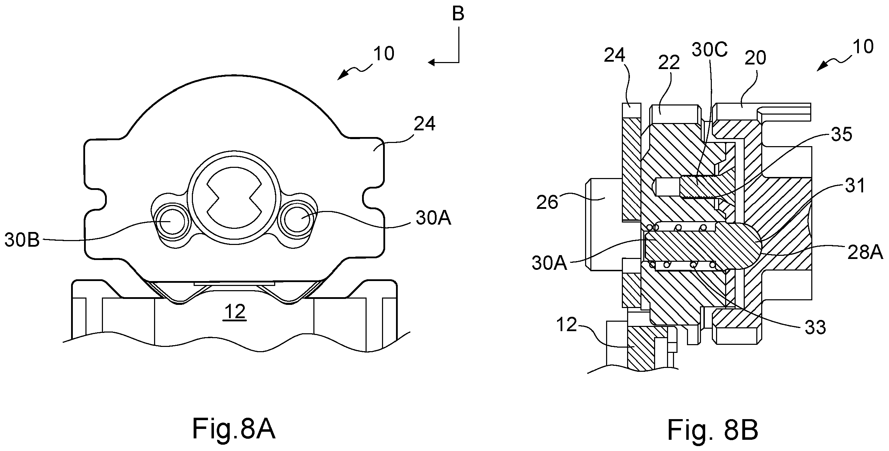

In use, and with reference to Figs. 8A to 10B, in a second scenario where reciprocal movement of the pressure plate 12 away from the clutch assembly 10 is allowed (e.g. where the mechanical combination lock is in an unlocked condition) the clutch assembly 10 begins in the at-rest position illustrated in Figs. 8A and 8B.

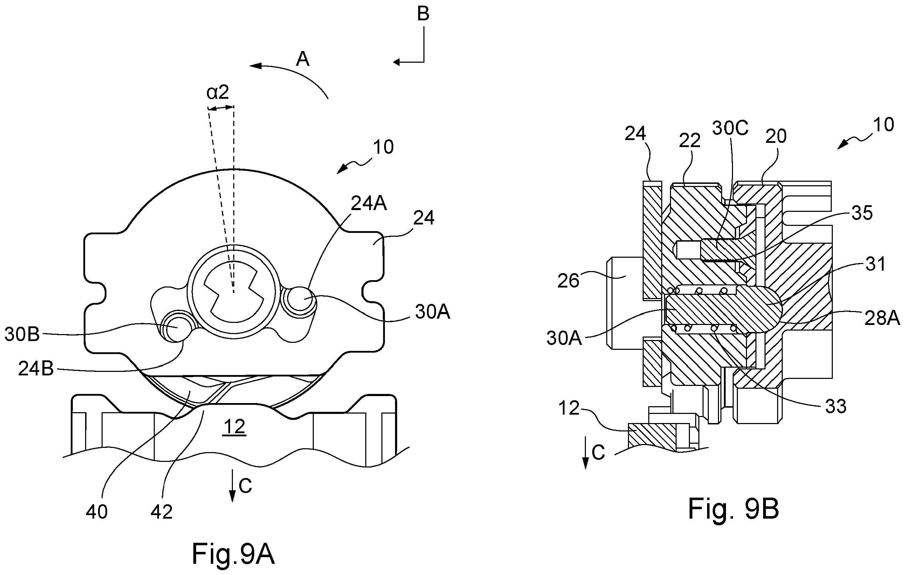

With reference to Figs. 9A and 9B, a user begins to turn the handle (not shown) in the direction A by a small angular rotation such that the drive member 20 and driven member 22 begin to rotate by a small angular rotation α2. This causes a shoulder 40 of the driven member 22 to abut against a shoulder 42 of the unlocked pressure plate 12 which thereby causes the pressure plate 12 to move downwards (since it is able to do so) away from the clutch assembly 10 in the direction indicated as C. This small angular rotation of the drive member 20 and driven member 22 also causes the clutch pins 30A and 30B to move past the extreme ends of their respective profiles 24B, 24C on the inside of the clutch pin retention plate 24.

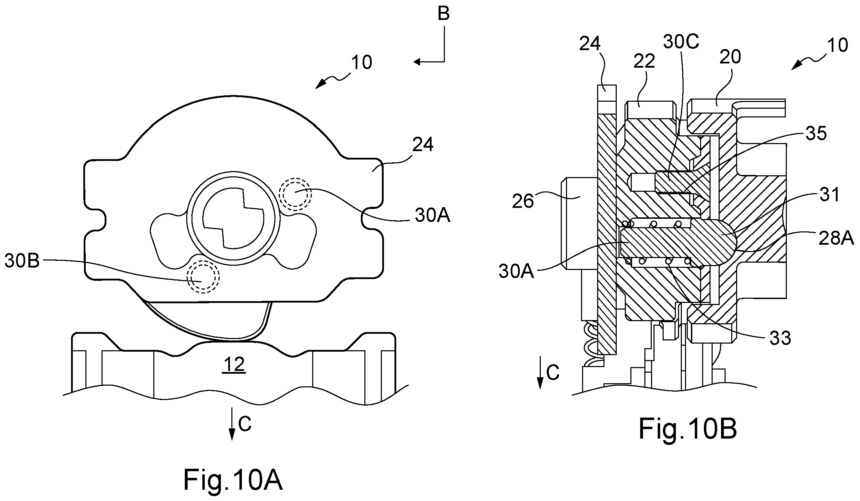

With reference to Figs. 10A and 10B, any further angular rotation of the handle (not shown) by the user causes the unlocked pressure plate 12 to move further in the direction C. The perpendicular force which would have been imparted at the intersection between the heads 31A, 31B of the clutch pins and the respective recesses 28A, 28B due to their engagement with one another is not present since movement of the pressure plate is not prevented by the unlocked pressure plate 12. Therefore, there is relatively less force acting against the helical springs 33 of each clutch pin and hence the clutch pins 30A, 30B will remain in driving contact with the inner profiles of recesses 28A, 28B of the drive member 20 throughout angular rotation. In addition, the tail ends of the clutch pins 30A, 30B are held securely in position by the clutch pin washer plate 24 and this further serves to retain the heads 31A, 31B of the clutch pins 30A, 30B in engagement with the recesses 28A, 28B of the drive member 20 during such angular rotation. In this way, when the pressure plate 12 is allowed to move in the direction C, the driven member 22 and drive member 20 do not enter any slipping mode and will instead automatically remain in angular rotational engagement with one another throughout rotation of the handle by the user. When in such rotational engagement with one another turning of the handle does result in turning of the spindle of any attached door unlocking mechanism and hence opens the door.

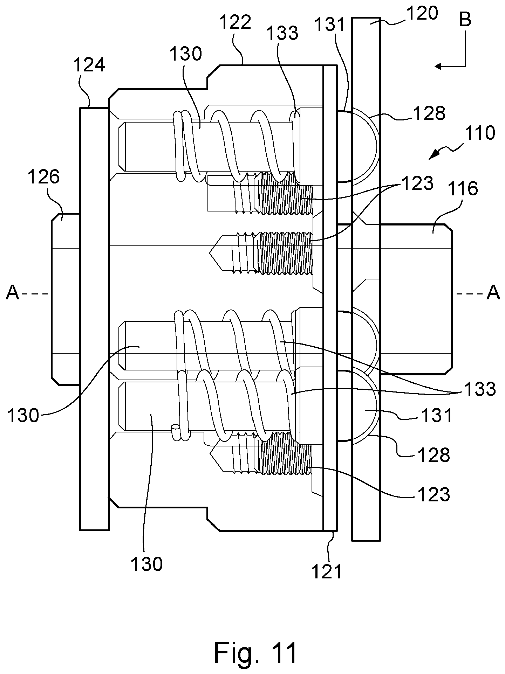

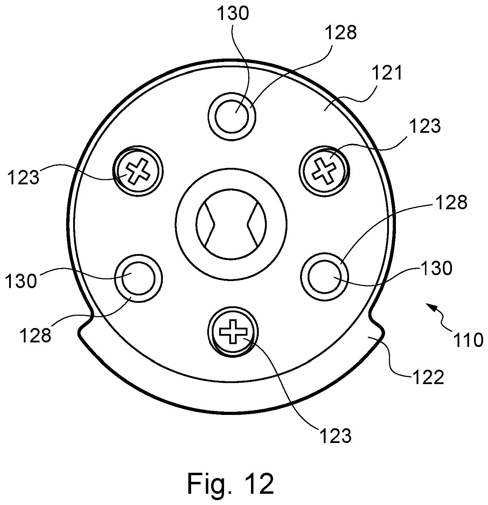

A second embodiment of the invention will now be described with particular reference to Figs. 11 to 15. In order to minimise repetition, similar features of the second embodiment are numbered with a common two-digit reference numeral and are differentiated by a third digit placed before the two common digits. Such features are generally structured similarly, operate similarly, and/or have generally similar functions unless otherwise indicated.

With reference to Fig. 11, in a second embodiment of the invention, a mechanical clutch assembly generally designated 110 is provided. This may be mounted adjacent to, and in mechanical engagement with, a pressure plate (not shown) of a mechanical combination lock as previously described with respect to the first embodiment.

Taking features in turn progressively from the right-hand side of Fig. 11, the mechanical clutch assembly 110 comprises a handle holder 116, a handle holder return spring (not shown), drive member 120, a clutch pin retaining plate 121, retaining screws 123, driven member 122, a series of three clutch pins 130 and associated helical springs 133, clutch pin washer plate 124 and spindle holder 126. The handle holder 116, handle holder return spring, drive member 120, clutch pin retaining plate 121, driven member 122, and spindle holder 126 are coaxially mounted in engagement with one another such that they may rotate on an axis of rotation A-A.

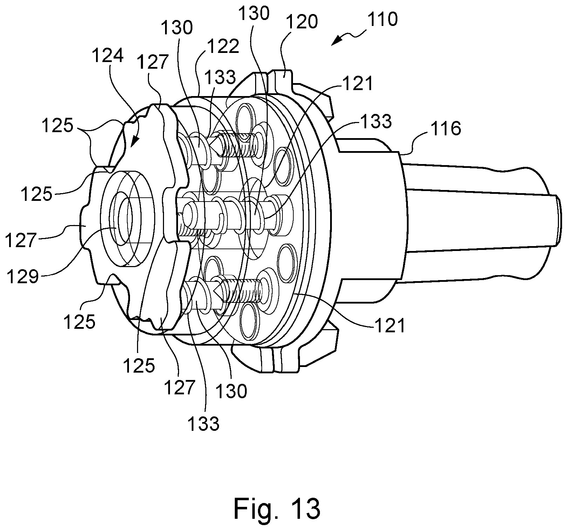

With reference to Fig. 13, the clutch pin washer plate 124 comprises a series of three recessed notches 125 and a series of three protrusions 127 spaced around its outer circumference. A central aperture 129 for receiving an end of a spindle therein is also provided. In use, the notches 125 and protrusions 127 of the clutch pin washer plate 124 are received within a similarly shaped recess on the lock body such that the recessed notches allow the tails of the clutch pins 130 to be selectively accommodated therein when the pins are in a slipping mode (discussed subsequently). As best illustrated in Fig. 13, these notches 125 have a length L in order to allow the tails of the clutch pins 130 to be accommodated therein when in first and second angular positions, as will be described subsequently.

With reference to Fig.13, the drive member 120 comprises an aperture 121 for receiving an end of a driven member spindle therein. The rear face of the drive member 120 comprises three clutch pin recesses 128 spaced around the aforementioned spindle aperture.

The clutch pins 130 extend between the driven member 122 and the drive member 120 and comprise a generally cylindrical tail portion and an enlarged and tapered semi-hemispherical head portion 131. The head profile of the head sections 131 are shaped in common with the profiles of the recesses 128 of the drive member 120; however, these are shaped with a cammed surface such that in the at-rest configuration (i.e. prior to the user angularly rotating the handle holder 116 by way of an attached handle an eccentric (i.e. off-centre) portion of the head sections 131 rest within the recesses 128. Resilient biasing means in the form of helical springs 133 are engaged with the clutch pins 130 in order to bias the heads 131 of the clutch pins into the recesses 128. A small difference in taper / angle profile between the heads 131 of the clutch pins 130 and the inner cammed surface of the recesses 128 facilitates the correct clutch engagement between the contact surfaces of the clutch pin heads 131 and the inner surface of the recesses 128.

Operation of the clutch assembly 110 of the second embodiment will now be described with reference to the same two example scenarios as previously described in relation to the first embodiment. In the first scenario reciprocal movement of the pressure plate away from the clutch assembly 110 is prevented (e.g. where the mechanical combination lock is in a locked condition). Whereas in the second scenario, reciprocal movement of the pressure plate away from the clutch assembly 110 is allowed (e.g. where the mechanical combination lock is in an unlocked condition).

In use, and with reference to Figs. 11 and 13 in a first scenario where movement of the pressure plate away from the clutch assembly 110 is prevented (e.g. where the mechanical combination lock is in a locked condition) the clutch assembly 110 begins in the at-rest position illustrated.

A user begins to turn the handle by a small angular rotation such that the drive member 120 and driven member 122 both begin to rotate together with one another by a small angular rotation. This causes a shoulder of the driven member 122 to abut against a shoulder of the pressure plate which thereby prevents further angular rotation of the driven member 122 (since the locked pressure plate is prevented from reciprocating away from the clutch arrangement 110). This small degree of angular rotation of the drive member 120 and driven member 122 also causes the clutch pins 130 to move in line with the extreme ends of their respective profiles 125 of the clutch washer plate 124. At this point, the drive member 120 and driven member 122 remain in rotational engagement with one another.

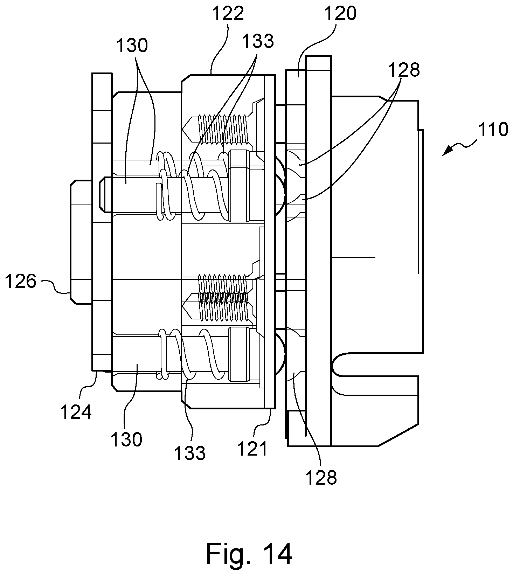

With reference to Fig 14, any further angular rotation of the handle by the user cannot rotate the driven member 122 due to the abutment between its shoulder and the shoulder of the locked pressure plate. However, in view of the fact that the drive member 120 engages with an eccentric portion of the pin head 131 sphere which is offset from the diameter of that sphere, such continued angular rotation will impart a component of perpendicular force (i.e. a component of force in the same plane as the apparatus axis of rotation A-A) at the intersection between the heads 131 of the clutch pins and the respective recesses 128 within which they otherwise reside. This component of perpendicular force pushes the clutch pins 130 against the bias of the helical springs 33 as illustrated in Fig. 14. In so doing, the tail end of the clutch pins 130A are pushed into receipt within the respective profiles 124 of the clutch pin washer plate 124.

At this point, the resultant dissociation of the clutch pins 130 and their respective recesses 128 of the drive member 120 disconnects the drive member 120 and the driven member 122 from being in rotational engagement with one another, such that the clutch assembly enters a slipping mode as is desired. Furthermore, the driven member 122 and drive member 120 will remain out of rotational engagement with one another while a (typically unauthorised) user turns the handle through greater angular rotations. When out of such rotational engagement turning of the handle does not result in turning of the spindle of any attached door unlocking mechanism and hence does not open the door.

When a (typically unauthorised) user returns the handle to the position illustrated in Figs. 11 and 13 the bias of the helical springs 133 will push the clutch pins 130 back into their respective recesses 128 on the drive member 120 in order to automatically re-establish rotational engagement between the drive member 120 and the driven member 122.

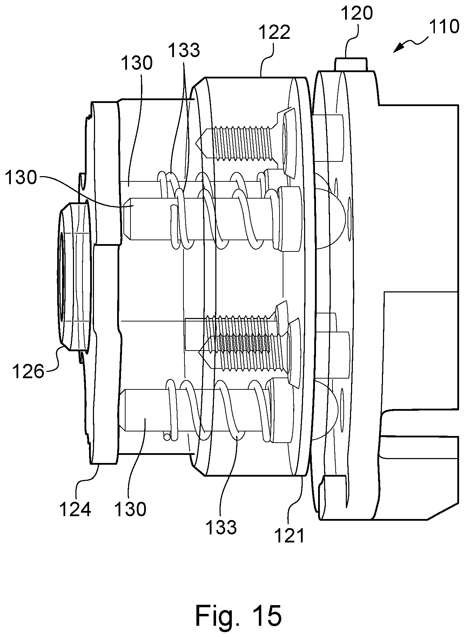

In use, and with reference to Fig. 15, in a second scenario where reciprocal movement of the pressure plate away from the clutch assembly 110 is allowed (e.g. where the mechanical combination lock is in an unlocked condition) the clutch assembly 110 begins in the at-rest position illustrated.

A user begins to turn the handle by a small angular rotation such that the drive member 120 and driven member 122 begin to rotate by a small angular rotation. This again causes a shoulder of the driven member to abut against a shoulder of the unlocked pressure plate which thereby causes the pressure plate to move downwards (since it is able to do so) away from the clutch assembly 110. This small angular rotation of the drive member 120 and driven member 122 also causes the clutch pins 130 to move past the extreme ends of their respective profiles 124 on the inside of the clutch pin retention plate 124.

With reference to Fig. 15, any further angular rotation of the handle by the user causes the unlocked pressure plate to move further. The perpendicular force which would have been imparted at the intersection between the heads 131 of the clutch pins 130 and the respective recesses 128 due to their engagement with one another is not present since movement of the pressure plate is not prevented by the unlocked pressure plate. Therefore, there is relatively less force acting against the helical springs 133 of each clutch pin and hence the clutch pins 130 will remain in driving contact with the inner profiles of recesses 128 of the drive member 120 throughout angular rotation. In addition, the tail ends of the clutch pins 130 are held securely in position by the clutch pin washer plate 124 and this further serves to retain the heads 131 of the clutch pins 130 in engagement with the recesses 128 of the drive member 120 during such angular rotation. In this way, when the unlocked pressure plate of the locking mechanism is allowed to move, the driven member 122 and drive member 120 do not enter any slipping mode and will instead automatically remain in angular rotational engagement with one another throughout rotation of the handle by the user. When in such rotational engagement turning of the handle does result in turning of the spindle of any attached door unlocking mechanism and hence opens the door.

The above described embodiments create a dislocation between the handle and the coding chamber of the lock if forced by an unauthorised user and thereby prevents an unauthorised user from deciphering the code through otherwise effective techniques. In addition, said dislocation also serves to protect the locking mechanism from damage.

Although particular embodiments of the invention have been disclosed herein in detail, this has been done by way of example and for the purposes of illustration only. The aforementioned embodiments are not intended to be limiting with respect to the scope of the statements of invention.

It is contemplated by the inventors that various substitutions, alterations, and modifications may be made to the invention without departing from scope of the invention as defined by the statements of invention. Examples of these include the following:-

Differently shaped clutch pins may be provided. For example, these could comprise wholly or partly linearly tapered cammed sections and the cammed recesses on the drive member could also be correspondingly shaped.

A greater or fewer number of clutch pins and / or locating pins may be provided.

The invention provides a mechanical clutch function. Although this has been described with particular reference to a locking arrangement this mechanical clutch function could equally be utilised in any application where selectively mechanically associating and selectively mechanically dissociating a drive component and a driven component is desired.

## Claims

1. A mechanical clutch (10, 110) for selectively mechanically connecting and disconnecting a rotational drive member (20, 120) and a rotational driven member (22, 122) within a locking mechanism; the mechanical clutch comprising:-
a drive member (20, 120) comprising a disc for rotation around an axis of rotation;
a driven member for rotation around said axis of rotation (A-A);
at least a clutch pin (30A, 30B, 130) which selectively engages with the drive member (20, 120) to selectively mechanically and rotationally link the drive (20, 120) and driven (22, 122) member to one another;
a clutch pin engagement surface (31, 31A, 31B, 131) provided on the or each clutch pin (30A, 30B, 130); and
a corresponding clutch pin engagement surface provided on the drive member (20, 120) in the form of recesses (28A, 28B, 28C, 128) on a face thereof such that, when the engaged drive (20, 120) and driven (22, 122) members are rotated against a magnitude of rotational resistance which is below a threshold magnitude of rotational resistance, the respective clutch pin engagement surfaces (31, 31A, 31B, 131) of the or each clutch pin (30A, 30B, 130) and drive member (20, 120) will co-act with one another to retain said rotational connection between the drive (20, 120) and driven (22, 122) member and, when the drive and driven members are rotated against a magnitude of rotational resistance which is above the threshold magnitude of rotational resistance the respective clutch pin engagement surfaces (31, 31A, 31B, 131) of the or each clutch pin (30A, 30B, 130) and drive (20, 120) member will co-act with one another to urge the or each clutch pin out of rotational driving engagement between the drive and driven member.

2. A mechanical clutch (10, 110) according to claim 1, wherein the drive (20, 120) and driven (22, 122) members comprise portions of a locking mechanism and wherein the threshold magnitude of rotational resistance is determined by the ability or inability of a locking component within the locking mechanism to move relative to the mechanical clutch.

3. A mechanical clutch (10, 110) according to either of claims 1 or 2, comprising a plurality of clutch pins (30A, 30B, 130) and respective clutch pin engagement surfaces (31, 31A, 31B, 131).

4. A mechanical clutch (10, 110) according any preceding claim, wherein the or each clutch pin engagement surface of the or each clutch pin (30A, 30B, 130) comprises a protruding tapered and rounded head portion (31, 131).

5. A mechanical clutch (10, 110) according to claim 4, wherein the or each rounded head portion comprises a semi-spherical portion (31, 131).

6. A mechanical clutch (10, 110) according to claim 5, wherein the or each clutch pin engagement surface (31, 31A, 31B, 131) of the or each clutch pin (30A, 30B, 130) and the or each corresponding clutch pin engagement surface (28A, 28B, 28C, 128) of the or each drive member (20, 120) are dimensioned and positioned relative to one another such that the portion of the or each clutch pin engagement surface of the or each drive member engages with a substantially eccentric portion of the or each semi-spherical head portion (31,131).

7. A mechanical clutch (10, 110) according to any preceding claim, wherein the or each clutch pin (30A, 30B, 130) comprises a tail portion mounted within a tail aperture of the driven member.

8. A mechanical clutch (10, 110) according to claim 7, wherein resilient means (33, 133) is provided in order to selectively resiliently urge the or each clutch pin (30A, 30B, 130) into engagement with the drive member (20, 120).

9. A mechanical clutch (10, 110) according to any preceding claim, wherein two clutch pins (30A, 30B, 130) are provided and a third locating pin (30C) is provided in order to provide mechanical support to the apparatus during rotational movement.

10. A mechanical clutch (10, 110) according to any of claims 1 to 8, wherein three clutch pins (30A, 30B, 130) are provided.

11. A mechanical clutch (10, 110) according to claim 2, wherein the clutch pin engagement recesses (28A, 28B, 28C, 128) are spaced around a central axis (A-A) of the disc and wherein the disc provides a slipping surface upon which heads (31, 31A, 31B, 131) of the clutch pins (30A, 30B, 130) may selectively slip during angular rotation (A) of the drive member (20, 120) relative to the driven member (22, 122) when the magnitude of rotational resistance of a locking mechanism is greater than the threshold magnitude of rotational resistance due to an inability of a locking component within a locking mechanism to move relative to the mechanical clutch (10, 110).

12. A method of preventing an unauthorised user from deciphering the unlock code of a mechanical door lock, the method comprising:-
selectively connecting and disconnecting a rotational drive member (20, 120) and a rotational driven member (22, 122) on a locking mechanism by providing a locking mechanism with a mechanical clutch assembly (10, 110) according to any of claims 1 to 11.

## Patentansprüche

1. Mechanische Kupplung (10, 110) zum selektiven mechanischen Verbinden und Trennen eines Drehantriebselements (20, 120) und eines Drehabtriebselements (22, 122) innerhalb eines Verriegelungsmechanismus, wobei die mechanische Kupplung umfasst:
ein Antriebselement (20, 120), das eine Scheibe zum Drehen um eine Drehachse umfasst;
ein Abtriebselement zum Drehen um die Drehachse (A-A);
mindestens einen Kupplungsstift (30A, 30B, 130), der selektiv in das Antriebselement (20, 120) eingreift, um selektiv mechanisch und drehend das Antriebs- (20, 120) und das Abtriebselement (22, 122) miteinander zu verbinden;
eine Kupplungsstifteingriffsoberfläche (31, 31A, 31B, 131), die auf dem oder jedem Kupplungsstift (30A, 30B, 130) bereitgestellt ist; und
eine entsprechende Kupplungseingriffsoberfläche, die auf dem Antriebselement (20, 120) in der Form von Vertiefungen (28A, 28B, 28C, 128) auf einer Fläche davon derart bereitgestellt sind, dass, wenn das Antriebs- (20, 120) und das Abtriebselement (22, 122) in Eingriff gegen ein Drehwiderstandsausmaß gedreht werden, das unter einem Drehwiderstandsschwellenausmaß liegt, die jeweiligen Kupplungsstifteingriffsoberflächen (31, 31A, 31B, 131) des oder jedes Kupplungsstifts (30A, 30B, 130) und Antriebselements (20, 120) miteinander zusammenwirken, um die Drehverbindung zwischen dem Antriebs- (20, 120) und dem Abtriebselement (22, 122) beizubehalten, und, wenn das Antriebs- und das Abtriebselement gegen ein Drehwiderstandsausmaß gedreht werden, das über dem Drehwiderstandsschwellenausmaß liegt, die jeweiligen Kupplungsstifteingriffsoberflächen (31, 31A, 31B, 131) des oder jedes Kupplungsstifts (30A, 30B, 130) und Antriebselements (20, 120) miteinander zusammenwirken, um den oder jeden Kupplungsstift aus dem Drehantriebseingriff zwischen dem Antriebs- und Abtriebselement zu treiben.

2. Mechanische Kupplung (10, 110) nach Anspruch 1, wobei das Antriebs- (20, 120) und das Abtriebselement (22, 122) Abschnitte eines Verriegelungsmechanismus umfassen, und wobei das Drehwiderstandsschwellenausmaß durch die Fähigkeit oder Unfähigkeit eines Verriegelungsbauteils innerhalb des Verriegelungsmechanismus, sich in Bezug auf die mechanische Kupplung zu bewegen, bestimmt wird.

3. Mechanische Kupplung (10, 110) nach einem der Ansprüche 1 oder 2, die eine Vielzahl von Kupplungsstiften (30A, 30B, 130) und jeweilige Kupplungsstifteingriffsoberflächen (31, 31A, 31B, 131) umfasst.

4. Mechanische Kupplung (10, 110) nach einem vorstehenden Anspruch, wobei die Kupplungsstifteingriffsoberfläche(n) des oder jedes Kupplungsstifts (30A, 30B, 130) einen vorragenden sich verjüngenden und gerundeten Kopfabschnitt (31, 131) umfasst/umfassen.

5. Mechanische Kupplung (10, 110) nach Anspruch 4, wobei der oder jeder gerundete Kopfabschnitt einen Halbsphärenabschnitt (31, 131) umfasst.

6. Mechanische Kupplung (10, 110) nach Anspruch 5, wobei die oder jede Kupplungsstifteingriffsoberfläche (31, 31A, 31B, 131) des oder jedes Kupplungsstifts (30A, 30B, 130) und die oder jede entsprechende Kupplungsstifteingriffsoberfläche (28A, 28B, 28C, 128) des oder jedes Antriebselements (20, 120) derart bemessen und in Bezug aufeinander positioniert sind, dass der Abschnitt der oder jeder Kupplungsstifteingriffsoberfläche des oder jedes Antriebselements in einen im Wesentlichen exzentrischen Abschnitt des oder jedes Halbsphärenabschnitts (31, 131) eingreift.

7. Mechanische Kupplung (10, 110) nach einem der vorstehenden Ansprüche, wobei der oder jeder Kupplungsstift (30A, 30B, 130) einen Endabschnitt umfasst, der innerhalb einer Endöffnung des Abtriebselements montiert ist.

8. Mechanische Kupplung (10, 110) nach Anspruch 7, wobei ein Federmittel (33; 133) bereitgestellt ist, um selektiv federnd den oder jeden Kupplungsstift (30A, 30B, 130) in den Eingriff mit dem Antriebselement (20, 120) zu treiben.

9. Mechanische Kupplung (10, 110) nach einem vorstehenden Anspruch, wobei zwei Kupplungsstifte (30A, 30B, 130) bereitgestellt sind, und ein dritter Ortungsstift (30C) bereitgestellt ist, um mechanisches Stützen für das Gerät während Drehbewegung bereitzustellen.

10. Mechanische Kupplung (10, 110) nach einem der Ansprüche 1 bis 8, wobei drei Kupplungsstifte (30A, 30B, 130) bereitgestellt sind.

11. Mechanische Kupplung (10, 110) nach Anspruch 2, wobei die Kupplungsstifteingriffsvertiefungen (28A, 28B, 28C, 128) um eine Mittenachse (A-A) der Scheibe beabstandet sind, und wobei die Scheibe eine Rutschoberfläche bereitstellt, auf der Köpfe (31, 31A, 31B, 131) der Kupplungsstifte (30A, 30B, 130) selektiv während Winkeldrehung (A) des Antriebselements (20, 120) in Bezug auf das Abtriebselement (22, 122) rutschen können, wenn das Drehwiderstandsausmaß eines Verriegelungsmechanismus größer ist als das Drehwiderstandsschwellenausmaß aufgrund einer Unfähigkeit eines Verriegelungsbauteils innerhalb eines Verriegelungsmechanismus, sich in Bezug auf die mechanische Kupplung (10, 110) zu bewegen.

12. Verfahren, um einen unbefugten Benutzer daran zu hindern, den Entriegelungscode einer mechanischen Türverriegelung zu entziffern, wobei das Verfahren umfasst:
selektives Verbinden und Trennen eines Drehantriebselements (20, 120) und eines Drehabtriebselements (22, 122) auf einem Verriegelungsmechanismus durch Bereitstellen eines Verriegelungsmechanismus mit einer mechanischen Kupplungsanordnung (10, 110) nach einem der Ansprüche 1 bis 11.

## Revendications

1. Embrayage mécanique (10, 110) pour sélectivement connecter et déconnecter mécaniquement un organe d'entraînement rotationnel (20, 120) et un organe entraîné rotationnel (22, 122) à l'intérieur d'un mécanisme de verrouillage; l'embrayage mécanique comprenant :
un organe d'entraînement (20, 120) comprenant un disque pour tourner autour d'un axe de rotation ;
un organe entraîné pour tourner autour dudit axe de rotation (A-A) ;
au moins une broche d'embrayage (30A, 30B, 130) qui se met sélectivement en prise avec l'organe d'entraînement (20, 120) pour sélectivement relier mécaniquement et de manière à pouvoir tourner l'organe d'entraînement (20, 120) et l'organe entraîné (22, 122) l'un à l'autre ;
une surface de mise en prise de broche d'embrayage (31, 31A, 31B, 131) prévue sur la ou chaque broche d'embrayage (30A, 30B, 130) ; et
une surface de mise en prise de broche d'embrayage correspondante prévue sur l'organe d'entraînement (20, 120) sous la forme d'évidements (28A, 28B, 28C, 128) sur une face de celui-ci de sorte que, lorsque l'organe d'entraînement (20, 120) et l'organe entraîné (22, 122) mis en prise sont tournés contre une grandeur de résistance rotationnelle qui est inférieure à une grandeur de seuil de résistance rotationnelle, les surfaces de mise en prise de broche d'embrayage (31, 31A, 31B, 131) respectives de la ou chaque broche d'embrayage (30A, 30B, 130) et de l'organe d'entraînement (20, 120) coopèrent l'une avec l'autre pour retenir ladite connexion rotationnelle entre l'organe d'entraînement (20, 120) et l'organe entraîné (22, 122) et, lorsque l'organe d'entraînement et l'organe entraîné sont tournés contre une grandeur de résistance rotationnelle qui est supérieure à la grandeur de seuil de résistance rotationnelle, les surfaces de mise en prise de broche d'embrayage (31, 31A, 31B, 131) respectives de la ou chaque broche d'embrayage (30A, 30B, 130) et de l'organe d'entraînement (20, 120) coopèrent l'une avec l'autre pour mettre la ou chaque broche d'embrayage hors prise d'entraînement rotationnel entre l'organe d'entraînement et l'organe entraîné.

2. Embrayage mécanique (10, 110) selon la revendication 1, dans lequel l'organe d'entraînement (20, 120) et l'organe entraîné (22, 122) comprennent des portions d'un mécanisme de verrouillage et dans lequel la grandeur de seuil de résistance rotationnelle est déterminée par la capacité ou l'incapacité d'un composant de verrouillage à l'intérieur du mécanisme de verrouillage à se déplacer par rapport à l'embrayage mécanique.

3. Embrayage mécanique (10, 110) selon la revendication 1 ou 2, comprenant une pluralité de broches d'embrayage (30A, 30B, 130) et de surfaces de mise en prise de broche d'embrayage (31, 31A, 31B, 131) respectives.

4. Embrayage mécanique (10, 110) selon l'une quelconque des revendications précédentes, dans lequel la ou chaque surface de mise en prise de broche d'embrayage de la ou chaque broche d'embrayage (30A, 30B, 130) comprend une portion de tête conique et arrondie saillante (31, 131).

5. Embrayage mécanique (10, 110) selon la revendication 4, dans lequel la ou chaque portion de tête arrondie comprend une portion semi-sphérique (31, 131).

6. Embrayage mécanique (10, 110) selon la revendication 5, dans lequel la ou chaque surface de mise en prise de broche d'embrayage (31, 31A, 31B, 131) de la ou chaque broche d'embrayage (30A, 30B, 130) et la ou chaque surface de mise en prise de broche d'embrayage correspondante (28A, 28B, 28C, 128) du ou de chaque organe d'entraînement (20, 120) sont dimensionnées et positionnées l'une par rapport à l'autre de sorte que la portion de la ou chaque surface de mise en prise de broche d'embrayage du ou de chaque organe d'entraînement se mette en prise avec une portion sensiblement excentrique de la ou chaque portion de tête semi-sphérique (31, 131).

7. Embrayage mécanique (10, 110) selon l'une quelconque des revendications précédentes, dans lequel la ou chaque broche d'embrayage (30A, 30B, 130) comprend une portion de queue montée à l'intérieur d'une ouverture de queue de l'organe entraîné.

8. Embrayage mécanique (10, 110) selon la revendication 7, dans lequel des moyens élastiques (33, 133) sont prévus pour sélectivement amener de manière élastique la ou chaque broche d'embrayage (30A, 30B, 130) à se mettre en prise avec l'organe d'entraînement (20, 120).

9. Embrayage mécanique (10, 110) selon l'une quelconque des revendications précédentes, dans lequel deux broches d'embrayage (30A, 30B, 130) sont prévues et une troisième broche de positionnement (30C) est prévue pour fournir un support mécanique à l'appareil au cours d'un mouvement rotationnel.

10. Embrayage mécanique (10, 110) selon l'une quelconque des revendications 1 à 8, dans lequel trois broches d'embrayage (30A, 30B, 130) sont prévues.

11. Embrayage mécanique (10, 110) selon la revendication 2, dans lequel les évidements de mise en prise de broche d'embrayage (28A, 28B, 28C, 128) sont espacés autour d'un axe central (A-A) du disque et dans lequel le disque fournit une surface de glissement sur laquelle des têtes (31, 31A, 31B, 131) des broches d'embrayage (30A, 30B, 130) peuvent sélectivement glisser au cours d'une rotation angulaire (A) de l'organe d'entraînement (20, 120) par rapport à l'organe entraîné (22, 122) lorsque la grandeur de résistance rotationnelle d'un mécanisme de verrouillage est supérieure à la grandeur de seuil de résistance rotationnelle en raison d'une incapacité d'un composant de verrouillage à l'intérieur d'un mécanisme de verrouillage à se déplacer par rapport à l'embrayage mécanique (10, 110).

12. Procédé pour empêcher qu'un utilisateur non autorisé ne déchiffre le code de déverrouillage d'une serrure de porte mécanique, le procédé comprenant :
la connexion et la déconnexion sélectivement d'un organe d'entraînement rotationnel (20, 120) et d'un organe entraîné rotationnel (22, 122) sur un mécanisme de verrouillage en dotant un mécanisme de verrouillage d'un assemblage d'embrayage mécanique (10, 110) selon l'une quelconque des revendications 1 à 11.
